# FASCICULE DE BREVET EUROPEEN

(11) **EP 0 687 311 B1**
(45) Date de publication et mention de la délivrance du brevet: **01.04.1998**
(21) Numéro de dépôt: 95903723.5
(22) Date de dépôt: 30.12.1994
(51) Int. Cl.: C23C 18/16, C23C 18/20, C23C 18/28, C08K 13/02, H01L 21/3205

(54) **RESINE POLYMERIQUE POUR LE DEPOT DE Pd CATALYTIQUE SUR UN SUBSTRAT**
POLYMERES HARZ ZUR KATALYTISCHEN ABSCHEIDUNG VON Pd AUF EIN SUBSTRAT
POLYMERIC RESIN FOR DEPOSITING CATALYTIC PALLADIUM ON A SUBSTRATE

(30) Priorité: 05.01.1994 BE 9400003
(43) Date de publication de la demande: 20.12.1995
(73) Titulaire: BLUE CHIPS HOLDING, 1724 Luxembourg (LU)
(72) Inventeur: DUPUIS, Olivier, B-1450 Chastre (BE); DELVAUX, Mary-Hélène, B-1450 Chastre (BE); DUFOUR, Pascale, B-1350 Rixensart (BE); MALNERO FERNANDEZ, Marie-Carmen, B-1080 Bruxelles (BE); SOUMILLION, Jean-Philippe, B-1390 Grez Doiceau (BE); SENDROWICZ, Henri, B-1050 Bruxelles (BE)
(74) Mandataire: Schmitz, Yvon
(86) Numéro de dépôt international: BE9400099
(87) Numéro de publication internationale: WO9518879

(56) Documents cités:
- EP-A- 0 250 867
- WO-A-93/12267
- US-A- 4 004 051

## Description

La présente invention a pour objet une résine polymérique à viscosité et pH ajustables pour le dépôt de palladium catalytique sur des substrats, son procédé de préparation et son utilisation.

L'objectif poursuivi est le dépôt de palladium catalytique en vue d'obtenir une métallisation de ce palladium à l'aide de bains autocatalytiques ou "electroless". Habituellement, les bains autocatalytiques sont initiés à l'aide de catalyseurs à base d'un colloïde de palladium-étain. Pour obtenir un dépôt sélectif à l'aide de ce catalyseur, il faut recourir à des photosensibilisateurs. Le substrat prétraité à l'aide du catalyseur de PdCl₂ est complètement recouvert de métal à l'aide de bains autocatalytiques. Sur celui-ci sont étalés des résists photosensibles. L'ensemble est ensuite irradié sous une lumière ultraviolette à travers un masque. Le développement du résist irradié donne le dessin du circuit. Afin de réduire le nombre d'étapes chimiques, un grand nombre de procédés ont été proposés pour déposer le palladium sélectivement. Toutefois, tous ces procédés présentent un certain nombre d'inconvénients du point de vue de la stabilité du produit au palladium ainsi que du nombre d'étapes et de la flexibilité de mise en oeuvre dudit produit.

A cet égard, K. Kondo et coll. ont proposé dans leur article "Photochemical Deposition of Pd(O) from Adsorbed Pd(II)-Complex Ions", J. Electrochem. Soc., Volume 139, n° 10, octobre 1992, un sensibilisateur au palladium permettant la métallisation sélective de produits céramiques, et plus particulièrement d'alumine à 96 %. Ce produit est préparé en mélangeant du chlorure de palladium (PdCl₂) et un ligand tel que de l'acide tartrique dans de l'eau, dans un rapport molaire de 5. Le pH de ce système est ensuite ajusté à 9,3 par l'addition d'hydroxyde de sodium. Les plaques d'alumine sont alors immergées dans la solution pendant 10 minutes et dans de l'eau désionisée pendant 3 minutes. Elles sont ensuite séchées à température ambiante. Les plaques sont alors irradiées à travers un masque pendant 6 minutes à l'aide d'une lampe à vapeur de mercure, l'excédant de produit non irradié étant enlevé en plongeant le substrat pendant 5 minutes dans une solution d'acide chlorhydrique à 60°C. Elles sont ensuite cuivrées sélectivement, selon le motif du masque à l'aide de bains autocatalytiques au cuivre. Le principal inconvénient de la solution sensibilisatrice au palladium ainsi obtenue est son manque de stabilité dans le temps. On constatera également que le nombre d'étapes de mise en oeuvre de la solution est encore élevé et que l'insolation à travers un masque est obligatoire et est la seule méthode de mise en oeuvre du produit utilisable. L'autre inconvénient majeur est que les produits de Kondo ne peuvent être considérés ni comme des résines (ils ne contiennent pas de polymères) mais plutôt comme des solutions, ni comme des produits à viscosité ajustable. En fait, la mise en oeuvre des solutions de Kondo ne peut se faire que par adsorption sur le substrat.

La demande de brevet WO 93/12267 de la déposante concerne également une résine polymérique pour le dépôt de métal sur des substrats, comprenant un composé de coordination et un dérivé cellulosique, en solution dans du diméthylformamide ou de l'eau comme solvant en fonction de la nature du dérivé cellulosique et du composé métallique. Les inconvénients majeurs découlant de l'utilisation de ces résines polymériques sont le fait qu'elles ne conviennent pas pour certains substrats polymériques comme le chlorure de polyvinyle, le polycarbonate, le polyamide, que leur utilisation avec des lampes ultraviolettes est très limitée car elles ne se décomposent qu'avec des lampes de haute puissance à 254 nm et que leur viscosité n'est ajustable que dans une moindre gamme. De plus, les moyens de mise en oeuvre de ces résines sont limités. Le jet d'encre, par exemple, ne peut être utilisé. En outre, aucun ajout n'est possible.

Un des buts essentiels de la présente invention consiste, par conséquent, à remédier aux inconvénients précités et à présenter une résine polymérique à viscosité et pH ajustables pour le dépôt de palladium catalytique sur un substrat, extrêmement stable dans le temps, pouvant être utilisée par un grand nombre de techniques de mise en oeuvre telles que le jet d'encre, l'étalement par rotation ("spin-coating"), la pointe pour traceur, la sérigraphie, le tampon, le pinceau, la plume à encre de Chine, le spray, etc., et permettant la métallisation autocatalytique sélective ou non (par exemple Cu, Ni, Ag, Au) de produits céramiques, produits plastiques ou polymériques, bois, métaux.

A cet effet, suivant l'invention, la résine polymérique comprend, en combinaison, un sel de palladium, un complexant du type acide carboxylique ou chlorure, un polymère contenant des groupes hydroxyle et/ou carboxyle soluble dans l'eau, un composé basique et un solvant choisi parmi l'eau, le méthanol et l'éthanol, la valeur de pH étant comprise entre 1 et 10.

Suivant une forme de réalisation avantageuse de l'invention, le sel de palladium est choisi parmi le chlorure de palladium, le sulfate de palladium, le nitrate de palladium et leurs mélanges, le complexant du type acide carboxylique est choisi dans le groupe comprenant les acides carboxyliques, les acides α-hydroxycarboxyliques, les polyacides carboxyliques et leurs mélanges et celui du type chlorure est choisi parmi l'acide chlorhydrique et les sels chlorés, le polymère contenant des groupes hydroxyle et/ou carboxyle est choisi parmi les polymères cellulosiques, les polymères acryliques et leurs mélanges et le composé basique est un sel basique, une base ou un mélange de ceux-ci.

Suivant une autre forme de réalisation avantageuse de l'invention, la résine polymérique comprend au moins un agent mouillant, un agent colorant, un agent promoteur d'adhérence, un agent tensioactif ou un agent antimousse ou une combinaison de deux ou plus de deux de ces agents.

Suivant une forme de réalisation particulièrement avantageuse de l'invention, la concentration en sel de palladium est de 0,05 à 5 % en poids et de préférence de 0,1 à 1,0 % en poids, la concentration en complexant du type acide carboxylique ou chlorure est de 0,01 à 5 % en poids et de préférence de 0,04 à 2,0 % en poids, la concentration en polymère contenant des groupes hydroxyle et/ou carboxyle est de 0,1 à 15 % en poids et de préférence de 0,1 à 7 % en poids et la concentration en composé basique est de 0,01 à 5 % en poids et de préférence de 0,01 à 2,5 % en poids si le composé basique est un sel basique et de 0,01 à 2,5 % en poids et de préférence de 0,1 à 1,5 % en poids si le composé basique est une base, la concentration totale éventuelle en agents précités est de 0,01 à 5 % et de préférence de 0,01 à 3 % en poids, le pourcentage en poids restant étant constitué par un solvant.

Suivant une autre forme de réalisation particulièrement avantageuse de l'invention, la résine polymérique comprend de l'eau déminéralisée comme solvant.

La présente invention concerne également la préparation de ces résines polymériques, qui consiste à mélanger séparément, d'une part, le sel de palladium et le complexant du type carboxylique ou chlorure dans les deux tiers du volume total de solvant jusqu'à leur dissolution complète pour former une première solution et, d'autre part, le polymère dans le tiers du volume total de solvant jusqu'à leur dissolution complète pour former une seconde solution, à ajouter la première solution à la seconde solution ou vice versa, à mélanger, à ajuster le pH à la valeur désirée entre 1 et 10 en ajoutant le composé basique et enfin en fonction de l'utilisation envisagée de la résine, à incorporer éventuellement un ou plusieurs des différents agents tels que l'agent mouillant, l'agent colorant, l'antimousse, le promoteur d'adhérence, l'agent tensioactif ou encore le colorant, ainsi que l'utilisation de ces résines polymériques pour la métallisation de vias, le prototypage et la fabrication de circuits imprimés, la fabrication de capteurs, comme protections électromagnétiques et articles ou motifs décoratifs.

D'autres détails et particularités de l'invention ressortiront de la description ci-après, à titre d'exemple non limitatif, de résines polymériques suivant l'invention, de leur préparation et de leurs applications pour le dépôt de palladium catalytique sur la surface de substrats ainsi que pour la métallisation de ces surfaces.

Comme on l'a déjà précisé précédemment, le but des résines polymériques de l'invention consiste à remplacer les solutions et résines polymériques au palladium connues jusqu'à présent, dont les inconvénients principaux sont le fait que les solutions ne sont pas stables dans le temps, leur méthode de mise en oeuvre est limitée (adsorption sur le substrat) et leurs viscosité et pH ne sont pas ajustables et que les résines ne conviennent pas pour la plupart des substrats polymériques (PVC, polycarbonate, polyamide), ne permettent pas la métallisation de vias, ne peuvent être utilisées qu'avec des lampes U.V. de haute puissance à 254 nm, demandent plus d'étapes pour être mises en oeuvre, ont une viscosité ajustable dans un faible intervalle et ne peuvent être appliquées par des moyens aussi simples que la pointe pour traceur ("rotring"). C'est ainsi que, suivant la présente invention, on a mis au point des résines polymériques à viscosité ajustable comprenant, en combinaison, un sel de palladium, un complexant du type acide carboxylique ou chlorure , un polymère contenant des groupes hydroxyle et/ou carboxyle soluble dans l'eau, un composé basique et un solvant tel que l'eau, avantageusement l'eau déminéralisée, le méthanol et l'ethanol, la valeur de pH étant comprise entre 1 et 10. Les avantages d'une viscosité et d'un pH ajustables résident dans le fait que la résine peut être mise en oeuvre à l'aide de différentes techniques, telles que l'étalement par rotation, le trempage, le jet d'encre, une plume, un stylo (stylo à plume, pointe pour traceur) et dans le fait que l'on peut obtenir des films d'épaisseur ajustable et contrôlée.

On donne ci-après quelques exemples avantageux des différents composés formant les résines polymériques de l'invention. Des exemples de sels de palladium sont le chlorure de palladium, le sulfate de palladium, le nitrate de palladium et leurs mélanges, le chlorure de palladium s'avérant particulièrement avantageux. Des exemples de complexants du type acide carboxylique sont les acides carboxyliques, les acides α-hydroxycarboxyliques, les polyacides carboxyliques et leurs mélanges. A cet égard, l'acide succinique, l'acide mésoxalique, l'acide gluconique et leurs mélanges conviennent comme acides carboxyliques, l'acide tartrique, l'acide malique, l'acide citrique et leurs mélanges conviennent comme acides a-hydroxycarboxyliques et l'acide polyacrylique atactique, l'acide polyméthacrylique et leurs mélanges conviennent comme polyacides carboxyliques. Des exemples de complexants du type chlorure sont l'acide chlorhydrique et les sels chlorés tels que le chlorure de sodium. Des exemples de polymères contenant des groupes hydroxyle et/ou carboxyle solubles dans l'eau sont les polymères cellulosiques et plus particulièrement les polymères cellulosiques hydroxyliques, les polymères acryliques et leurs mélanges. A cet égard, la carboxyméthylcellulose, l'hydroxypropylméthylcellulose et leurs mélanges sont des exemples avantageux de polymères cellulosiques et l'acide polyacrylique, l'acide polyméthacrylique et leurs mélanges sont des exemples avantageux de polymères acryliques. Des exemples de composés basiques sont les sels basiques, les bases et leurs mélanges, le carbonate de sodium, le carbonate de potassium, le carbonate de calcium et leurs mélanges convenant particulièrement bien comme sels basiques, l'hydroxyde de potassium, l'hydroxyde de sodium et leurs mélanges convenant particulièrement bien comme bases.

Comme ajouts compatibles avec la résine polymérique de l'invention, on ajoutera avantageusement ainsi qu'on l'a déjà précisé précédemment, un ou des mélanges d'agents mouillant, antimousse, promoteur d'adhérence, tensioactif ou colorant. A cet égard, des agents mouillants intéressants sont les silanes, les esters de polymères fluoroaliphatiques ou encore les produits à haut pourcentage en 2-butoxyéthanol. Des produits du commerce de ce type sont le Dapro et le Schwego-wett (marques déposées). Pour les antimousses, on utilisera avantageusement des compositions chimiques à base de solides organiques hydrophobes dispersés dans des liquides paraffiniques comme le Dapro (marque déposée). Comme promoteurs d'adhérence, on utilisera des matières solubles ou miscibles à l'eau contenant des groupes fonctionnels capables d'attaquer la surface du substrat, tels que les groupes amines, carboxylates et/ou méthacryloxy, comme le produit d'appellation commerciale Manchem ou PM925 (marque déposée) de Shipley. Comme tensioactifs, on utilisera des surfactants hydrocarbonés, les glycols hydrocarbonés ou les huiles végétales tels que, par exemple, les Troykyd (marque déposée) D666, D333 et D999 et enfin, les colorants seront pour la plupart des pigments à base d'oxyde de titane comme le Tiona (marque déposée). Ces agents sont toutefois cités à titre non limitatif. D'une manière générale, la majorité des additifs solubles dans l'eau, notamment ceux utilisés dans les peintures, peuvent être employés.

En ce qui concerne les concentrations des différents composants des résines polymériques de l'invention, celles-ci dépendent bien entendu de la nature de ces composants et du solvant utilisé. Toutefois, on utilisera d'une manière générale, suivant l'invention, le sel de palladium en une concentration, en pourcentage en poids, de 0,05 à 5 % et de préférence de 0,1 à 1,0 %, le complexant du type acide carboxylique ou chlorure en une concentration, en pourcentage en poids, de 0,01 à 5 % et de préférence de 0,04 à 2 %, le polymère contenant des groupes hydroxyle et/ou carboxyle en une concentration, en pourcentage en poids, de 0,1 à 15 % et de préférence de 0,1 à 7 % et le sel basique en une concentration, en pourcentage en poids, de 0,01 à 5 % et de préférence de 0,01 à 2,5 % ou la base en une concentration, en pourcentage en poids, de 0,1 à 2,5 % et de préférence de 0,1 à 1,5 %. La concentration totale en agents ou ajouts, en pourcentage en poids, est de 0,01 à 5 % et de préférence de 0,01 à 3 %.

Les résines polymériques de l'invention sont des nouvelles molécules, plus particulièrement des complexes de coordination issus du mélange des quatre types de composés qu'elles contiennent et du solvant. En fait, le complexant du type acide carboxylique se lie au sel de Pd(II) pour former un complexe de coordination stabilisé en solution grâce à la présence du polymère cellulosique et/ou acrylique, qui joue également le rôle d'agent complexant pour former un oligomère lorsqu'il contient des groupes carboxyle. Le composé basique permet en fait de ramener le produit qui est fortement acide et, par conséquent, extrêmement corrosif dans une zone de pH de 1 à 10, notamment pour pouvoir l'utiliser dans les appareils pour sa mise en oeuvre.

La préparation des résines polymériques de l'invention se fait suivant un processus de mélange bien particulier. Dans un premier temps, on mélange dans un premier récipient le sel de palladium et le complexant dans les deux tiers du volume total de solvant et dans un second récipient le polymère dans le tiers restant du volume total de solvant. Après dissolution complète des composants respectifs, on ajoute la solution du premier récipient à celle du second récipient ou vice versa, on mélange, on ajuste le pH à la valeur désirée entre 1 et 10 en ajoutant le composé basique et, enfin, en fonction de l'utilisation finale de la résine polymérique, on incorpore les différents ajouts tels que l'agent mouillant, l'antimousse, le promoteur d'adhérence, l'agent tensioactif ou encore le colorant. Ce procédé en trois phases permet d'obtenir un produit limpide sans précipité. Une telle limpidité ne peut pas être obtenue si l'on procède au mélange en vrac des quatre composants dans le solvant. Les conditions de mélange (vitesse de mélange et température) ne sont pas critiques pour autant qu'on obtienne une dissolution complète des composants dans le solvant. On procède généralement à température ambiante. La viscosité des résines polymériques ainsi obtenues se situe d'une manière générale entre 2 et 15000 cps et de préférence entre 3 et 5000 cps. Comme on l'a déjà précisé, le principal avantage d'une résine à viscosité ajustable réside dans le fait que le produit peut être utilisé à l'aide des différentes techniques d'application existantes et sur n'importe quel substrat. Pour rendre cette utilisation plus large, on ajuste le pH en ajoutant une base ou un composé basique afin d'obtenir le pH désiré entre 1 et 10. Des composés tels que les agents mouillant, antimousse, promoteur d'adhérence, tensioactif et colorant précités, pris seuls ou en combinaison, peuvent encore y être ajoutés afin d'obtenir une bonne mouillabilité de la résine sur les substrats plastiques notamment, le passage en machines à jet d'encre sans qu'il n'y ait de problèmes de mousse, une bonne adhérence du dépôt métallique sans prétraitement du substrat. La métallisation autocatalytique sélective ou non est obtenue soit en plongeant directement le substrat recouvert de résine de Pd(II) dans le bain autocatalytique [réduction chimique en palladium catalytique Pd(0)] soit en décomposant préalablement la résine de Pd(II) en palladium catalytique Pd(0) photochimiquement à l'aide de lampes U.V. (vapeur de mercure) ou d'un laser excimère à travers un masque, ou encore thermiquement dans un four ou sous irradiation au laser visible ou infrarouge.

La nature des polymères (cellulosiques et/ou acryliques) est, à cet égard, extrêmement importante. C'est ainsi que si l'on utilise des polymères tels que le polyacrylamide, le poly(N-isopropylacrylamide), le poly(méthacrylamide), le poly(2-méthoxyéthoxyéthylène) ou un polyvinyle contenant des groupes hydroxyle et/ou carboxyle, le complexe de coordination donnant l'effet catalytique permettant la métallisation ne se forme pas. On n'obtient donc pas de métallisation et les résines obtenues ne sont pas stables et leur viscosité n'est pas ajustable. La nature du solvant est également importante. Par exemple, l'utilisation d'un solvant organique autre que le méthanol ou l'éthanol provoque la destruction du complexe de coordination et l'annihilation de l'effet catalytique permettant la métallisation. C'est ainsi que si l'on utilise de l'acétone ou de l'isopropanol, la résine est instable et l'on ne peut pas obtenir de métallisation.

On donne ci-après des exemples de résines polymériques de l'invention ainsi que leurs techniques de mise en oeuvre.

### Exemple 1

### Irradiation U.V.

| Composition de la résine : | |
|---|---|
| PdCl₂ | 0,75 % en poids |
| Acide tartrique | 0,12 % en poids |
| Carboxyméthylcellulose | 0,4 % en poids |
| Na₂CO₃ | 2 % en poids |
| Le reste en eau déminéralisée ou méthanol. | |

On mélange dans un premier récipient le chlorure de palladium et l'acide tartrique dans les 2/3 du volume total d'eau ou de méthanol et on mélange dans un second récipient la carboxyméthylcellulose et le carbonate de sodium dans le 1/3 restant d'eau ou de méthanol. Après dissolution complète des composants, on ajoute la première solution à la seconde solution et on mélange à nouveau pour obtenir un liquide limpide sans précipité.

### Substrats essayés :

Céramiques Al₂O₃ et plastiques (époxy, polycarbonate, polyimide).

### Mise en oeuvre de la résine :

Etalement par rotation avec une accélération de 400 tours/min./s et une vitesse de 1000 tours/min pendant 60 s et séchage pendant 30 s à l'aide d'un thermoventilateur.

L'ensemble est ensuite irradié, à travers un masque, à l'aide d'une lampe à vapeur de mercure de 500 W pendant 1 heure. La résine non irradiée est ensuite retirée en lavant l'échantillon sous un jet d'eau déminéralisée. Les parties irradiées sont ensuite métallisées, par un dépôt de cuivre ou de nickel, en plongeant l'échantillon dans un bain autocatalytique au cuivre ou au nickel.

### Exemple 2

### Métallisation directe à l'aide d'une table traçante

| Composition de la résine : | |
|---|---|
| PdCl₂ | 0,25 % en poids |
| Acide succinique, gluconique ou tartrique ou bien HCl ou NaCl | 0,04 % en poids |
| Polymère acrylique, hydroxypropylméthylcellulose ou carboxyméthylcellulose | 0,4 % en poids |
| KOH | 1 % en poids |
| Le reste en eau déminéralisée ou méthanol. | |

Pour préparer la résine, on procède comme dans l'Exemple 1.

### Substrats essayés :

Céramiques, Al₂O₃ et plastiques (époxy, polycarbonate, polyimide, PVC).

### Mise en oeuvre de la résine :

La résine est disposée dans le réservoir d'une pointe pour traceur ("rotring") Rapidoplot (marque déposée), d'un diamètre respectivement de 0,70, 0,35 et 0,25 mm, qui est lui-même disposé sur une table traçante reliée à un PC. Le traceur effectue le dessin souhaité, avec la résine, sur le substrat. L'ensemble est séché au thermoventilateur. Le dessin est ensuite métallisé, par un dépôt de cuivre ou nickel, en plongeant l'échantillon dans un bain autocatalytique au cuivre ou au nickel.

### Exemple 3

### Métallisation directe à l'aide d'un pinceau

| Composition de la résine : | |
|---|---|
| PdCl₂ | 0,25 % en poids |
| Acide succinique, mésoxalique, gluconique, tartrique, malique, citrique, polyacrylique atactique ou polyméthacrylique | 0,04 % en poids |
| Polymère acrylique ou hydroxypropylméthylcellulose | 0,4 % en poids |
| Na₂CO₃ | 2 % en poids |
| Le reste en eau déminéralisée ou méthanol | |

Pour préparer la résine, on procède comme dans l'Exemple 1.

### Substrats essayés :

Céramiques, Al₂O₃ et plastiques (époxy, polycarbonate, polyimide, PVC).

### Mise en oeuvre de la résine :

La résine est étalée sur le substrat à l'aide d'un pinceau. L'ensemble est séché au thermoventilateur. Le dessin est ensuite métallisé, par un dépôt de cuivre ou de nickel, en plongeant l'échantillon dans un bain autocatalytique au cuivre ou au nickel.

On notera que dans le cas des métallisations directes, une activation de la résine après son étalement sur le substrat est conseillée pour le dépôt de cuivre, cette activation pouvant être thermique (250°C), photochimique (lampe à vapeur de mercure) ou chimique (trempage du substrat avec la résine dans une solution d'hypophosphite de sodium à 20 % en poids, chaude à 80°C).

### Exemple 4

### Métallisation directe par jet d'encre activation thermique

| Composition de la résine (encre) : | |
|---|---|
| PdCl₂ | 0,25 % en poids |
| Acide tartrique ou autre (voir Exemple 3) | respectivement 0,04, 1,06 ou 0,2 % en poids |
| Carboxyméthylcellulose | 1,80 % en poids |
| Hydroxyde de potassium | 0,2 % en poids |
| Agent mouillant (esters de polymères fluoroaliphatiques) | 0,1 % en poids |
| Le reste en eau déminéralisée. | |

On mélange dans un premier récipient le chlorure de palladium et l'acide tartrique dans les 2/3 du volume total d'eau et on mélange dans un second récipient la carboxyméthylcellulose et 0,02 % en poids de potasse dans le 1/3 du volume d'eau restant. Après dissolution complète des composants, on ajoute la première solution à la seconde solution et on mélange de nouveau pour obtenir un liquide limpide sans précipité. Le pH est ensuite ajusté à 7 en ajoutant 0,18 % de potasse. On ajoute ensuite l'agent mouillant. La résine ainsi obtenue est filtrée sur 1 µm absolu.

### Substrats essayés :

Céramiques, verre, plastiques : polyimide, polyétherimide [Ultem (marque déposée) de General Electric].

### Mise en oeuvre de la résine :

La résine est disposée dans le réservoir d'encre d'une machine à jet d'encre [IMAJE Jaime 1000 S3 TP ou HP DeskJet (marque déposée) par exemple]. La machine effectue le dessin (ou circuit) souhaité avec la résine, sur le substrat. L'ensemble est ensuite chauffé à 250°C pour activer la résine. Le dessin est ensuite métallisé, par un dépôt de cuivre ou de nickel, en plongeant l'échantillon dans un bain autocatalytique au cuivre ou au nickel.

### Exemple 5

### Métallisation directe par jet d'encre activation photochimique

| Composition de la résine (encre) : | |
|---|---|
| PdCl₂ | 0,125 % en poids |
| Acide tartrique ou autre (voir Exemple 3) | respectivement 0,02, 0,5 ou 0,1 % en poids |
| Carboxyméthylcellulose | 1,80 % en poids |
| Hydroxyde de potassium | 0,2 % en poids |
| Agent mouillant (esters de polymères fluoroaliphatiques) | 0,1 % en poids |
| Le reste en eau déminéralisée. | |

On mélange dans un premier récipient le chlorure de palladium et l'acide tartrique dans les 2/3 du volume total d'eau et on mélange dans un second récipient la carboxyméthylcellulose et 0,02 % en poids de potasse dans le 1/3 du volume d'eau restant. Après dissolution complète des composants, on ajoute la première solution à la seconde solution et on mélange de nouveau pour obtenir un liquide limpide sans précipité. Le pH est ensuite ajusté à 7 en ajoutant 0,18 % de potasse. On ajoute ensuite l'agent mouillant. La résine ainsi obtenue est filtrée sur 1 µm absolu.

### Substrats essayés :

Céramiques, verre, plastiques : polyimide, polyétherimide, PVC, époxy, ABS, polycarbonate, polyamide, etc.

### Mise en oeuvre de la résine :

La résine est disposée dans le réservoir d'encre d'une machine à jet d'encre [IMAJE Jaime 1000 S3 TP ou HP DeskJet (marques déposées) par exemple]. La machine effectue le dessin (ou circuit) souhaité avec la résine, sur le substrat. L'ensemble est insolé à l'aide d'une lampe U.V. (révélateur de chromatogrammes) pour activer la résine. Le dessin est ensuite métallisé, par un dépôt de cuivre ou de nickel, en plongeant l'échantillon dans un bain autocatalytique au cuivre ou au nickel.

### Exemple 6

### Métallisation directe par table traçante activation photochimique

| Composition de la résine (encre) : | |
|---|---|
| PdCl₂ | 0,25 % en poids |
| Acide tartrique ou autre (voir Exemple 3) | 0,02 % en poids |
| Hydroxypropylméthylcellulose ou méthylcellulose | 0,4 % en poids |
| Hydroxyde de potassium | 0,3 % en poids |
| Promoteur d'adhérence [PM925 (marque déposée) de Shipley] | 0,5 % en poids |
| Le reste en eau déminéralisée | |

On mélange dans un premier récipient le chlorure de palladium et l'acide tartrique dans les 2/3 du volume total d'eau et on mélange dans un second récipient le polymère cellulosique et 0,02 % en poids de potasse dans le 1/3 du volume d'eau restant. Après dissolution complète des composants, on ajoute la première solution précitée. Le pH est ensuite ajusté à 7 en ajoutant le reste de potasse. Le promoteur d'adhérence est ensuite ajouté.

### Substrats essayés :

Céramiques, verre, plastiques : polyimide, polyétherimide, PVC, époxy, ABS, polycarbonate, polyamide, etc.

### Mise en oeuvre de la résine :

La résine est disposée dans le réservoir d'une pointe pour traceur (rotring) Rapidoplot (marque déposée), d'un diamètre respectivement de 0,70, 0,50, 0,35 et 0,25 mm, qui est lui-même disposé sur une table traçante reliée à un PC. Le traceur effectue le dessin (ou circuit) souhaité avec la résine, sur le substrat. L'ensemble est ensuite insolé à l'aide d'une lampe U.V. (révélateur de chromatogrammes) pour activer la résine. Le dessin est ensuite métallisé, par un dépôt de cuivre ou de nickel, en plongeant l'échantillon dans un bain autocatalytique au cuivre ou au nickel.

Comme on vient de l'exemplifier, les résines polymériques de l'invention peuvent être appliquées d'une manière sélective ou non sur le substrat non seulement par jet d'encre, pointe pour table traçante, pinceau, mais également au moyen d'un stylo, d'une plume, d'un tampon, par sérigraphie, lasers, spray.

Les applications concrètes des résines polymériques de l'invention sont d'une manière non limitative la métallisation de vias, le prototypage de circuits imprimés, la fabrication de circuits imprimés, la fabrication de capteurs, la réalisation de protections électromagnétiques, la fabrication de décorations.

Il doit être entendu que la présente invention n'est en aucune façon limitée aux formes de réalisation décrites ci-dessus et que bien des modifications peuvent y être apportées sans sortir du cadre du présent brevet.

## Revendications

1. Résine polymérique à viscosité et pH ajustables pour le dépôt de palladium catalytique sur un substrat, caractérisée en ce qu'elle comprend, en combinaison, un sel de palladium, un complexant du type acide carboxylique ou chlorure, un polymère contenant des groupes hydroxyle et/ou carboxyle soluble dans l'eau, un composé basique et un solvant choisi parmi l'eau, le méthanol et l'éthanol, la valeur de pH étant comprise entre 1 et 10.

2. Résine suivant la revendication 1, caractérisée en ce que le sel de palladium est choisi parmi le chlorure de palladium, le sulfate de palladium, le nitrate de palladium et leurs mélanges.

3. Résine suivant l'une ou l'autre des revendications 1 et 2, caractérisée en ce que le complexant du type acide carboxylique est choisi dans le groupe comprenant les acides carboxyliques, les acides a-hydroxycarboxyliques, les polyacides carboxyliques et leurs mélanges.

4. Résine suivant la revendication 3, caractérisée en ce que lorsqu'elle comprend un acide carboxylique comme complexant, celui-ci est choisi parmi l'acide succinique, l'acide mésoxalique, l'acide gluconique et leurs mélanges.

5. Résine suivant la revendication 3, caractérisé en ce que lorsqu'elle comprend un acide α-hydroxycarboxylique comme complexant, celui-ci est choisi parmi l'acide tartrique, l'acide malique, l'acide citrique et leurs mélanges.

6. Résine suivant la revendication 3, caractérisé en ce que lorsqu'elle comprend un polyacide carboxylique comme complexant, celui-ci est choisi parmi l'acide polyacrylique atactique, l'acide polyméthacrylique et leurs mélanges.

7. Résine suivant l'une ou l'autre des revendications 1 et 2, caractérisée en ce que le complexant du type chlorure est choisi parmi l'acide chlorhydrique et les sels chlorés.

8. Résine suivant l'une quelconque des revendications 1 à 7, caractérisée en ce que le polymère contenant des groupes hydroxyle et/ou carboxyle est choisi parmi les polymères cellulosiques, les polymères acryliques et leurs mélanges.

9. Résine suivant la revendication 8, caractérisée en ce qu'elle comprend comme polymère cellulosique, de la carboxyméthylcellulose, de l'hydroxypropylméthylcellulose ou leurs mélanges.

10. Résine suivant la revendication 8, caractérisée en ce qu'elle comprend comme polymère acrylique, l'acide polyacrylique, l'acide polyméthacrylique ou un mélange de ceux-ci.

11. Résine suivant l'une quelconque des revendications 1 à 10, caractérisée en ce que le composé basique est un sel basique, une base ou un mélange de ceux-ci.

12. Résine suivant la revendication 11, caractérisée en ce que le composé basique est un sel basique choisi dans le groupe comprenant le carbonate de sodium, le carbonate de potassium, le carbonate de calcium et leurs mélanges.

13. Résine suivant la revendication 11, caractérisée en ce que le composé basique est une base choisie parmi l'hydroxyde de potassium, l'hydroxyde de sodium et leurs mélanges.

14. Résine suivant l'une quelconque des revendications 1 à 13, caractérisée en ce qu'elle comprend au moins un agent mouillant, un agent colorant, un agent promoteur d'adhérence, un agent tensioactif ou un agent antimousse ou une combinaison de deux ou plus de deux de ces agents.

15. Résine suivant la revendication 14, caractérisée en ce qu'elle comprend comme agent mouillant au moins un silane, un ester de polymère fluoroaliphatique ou un produit à haute teneur en 2-butoxy-éthanol.

16. Résine suivant l'une ou l'autre des revendications 14 et 15, caractérisée en ce qu'elle comprend comme agent promoteur d'adhérence un composé soluble ou miscible à l'eau contenant des groupes fonctionnels pouvant attaquer la surface du substrat, tels que amines, carboxylates et/ou méthacryloxy.

17. Résine suivant l'une quelconque des revendications 14 à 16, caractérisée en ce qu'elle comprend comme agent colorant un pigment à base d'oxyde de titane.

18. Résine suivant l'une quelconque des revendications 1 à 17, caractérisée en ce que la concentration en sel de palladium, en pourcentage en poids, est de 0,05 à 5 % et de préférence de 0,1 à 1,0 %.

19. Résine suivant l'une quelconque des revendications 1 à 18, caractérisée en ce que la concentration en complexant du type acide carboxylique ou chlorure, en pourcentage en poids, est de 0,01 à 5 % et de préférence de 0,04 à 2 %.

20. Résine suivant l'une quelconque des revendications 1 à 19, caractérisée en ce que la concentration en polymère contenant des groupes hydroxyle et/ou carboxyle, en pourcentage en poids, est de 0,1 à 15 % et de préférence de 0,1 à 7 %.

21. Résine suivant l'une quelconque des revendications 12 et 14 à 20, caractérisée en ce que la concentration en sel basique, en pourcentage en poids, est de 0,01 à 5 % et de préférence de 0,01 à 2,5 %.

22. Résine suivant l'une quelconque des revendications 13 à 20, caractérisée en ce que la concentration en base, en pourcentage en poids, est de 0,01 à 2,5 % et de préférence de 0,1 à 1,5 %.

23. Résine suivant l'une quelconque des revendications 14 à 22, caractérisée en ce que la concentration totale en agent(s) précité(s), en pourcentage en poids, est de 0,01 à 5 % et de préférence de 0,01 à 3 %.

24. Résine suivant l'une quelconque des revendications 1 à 23, caractérisée en ce qu'elle comprend de l'eau déminéralisée comme solvant.

25. Résine suivant l'une quelconque des revendications 1 à 3, 5, 8, 9, 11, 12 et 18 à 21, caractérisée en ce qu'elle comprend 0,75 % en poids de chlorure de palladium, 0,12 % en poids d'acide tartrique, 0,4 % en poids de carboxyméthylcellulose, 2,0 % en poids de carbonate de sodium et le pourcentage en poids restant en eau déminéralisée ou méthanol.

26. Résine suivant l'une quelconque des revendications 1 à 5, 7 à 11, 13, 18 à 20 et 22, caractérisée en ce qu'elle comprend 0,25 % en poids de chlorure de palladium, 0,04 % en poids d'acide succinique, gluconique, tartrique, chlorhydrique ou de chlorure de sodium, 0,4 % en poids d'acide polyacrylique, d'acide polyméthacrylique, d'hydroxyméthylcellulose ou de carboxyméthylcellulose, 1 % en poids d'hydroxyde de potassium et le pourcentage en poids restant en eau déminéralisée ou méthanol.

27. Résine suivant l'une quelconque des revendications 1 à 12 et 18 à 21, caractérisée en ce qu'elle comprend 0,25 % en poids de chlorure de palladium, 0,04 % en poids d'acide succinique, mésoxalique, gluconique, tartrique, malique, citrique, polyacrylique atactique ou polyméthacrylique, 0,4 % en poids d'acide polyacrylique, d'acide polyméthacrylique ou d'hydroxyméthylcellulose, 2 % en poids de carbonate de sodium et le pourcentage en poids restant en eau déminéralisée ou méthanol.

28. Résine suivant l'une ou l'autre des revendications 14 et 15, caractérisée en ce qu'elle comprend 0,25 % en poids de chlorure de palladium, 0,04 % en poids d'acide succinique, mésoxalique, gluconique, tartrique, malique, citrique, polyacrylique atactique ou polyméthacrylique, 1,8 % en poids de carboxyméthylcellulose, 0,2 % en poids d'hydroxyde de potassium et 0,1 % d'esters de polymères fluoroaliphatiques.

29. Résine suivant l'une ou l'autre des revendications 14 et 15, caractérisée en ce qu'elle comprend 0,25 % en poids de chlorure de palladium, 1,06 % en poids d'acide succinique, mésoxalique, gluconique, tartrique, malique, citrique, polyacrylique atactique ou polyméthacrylique, 1,8 % en poids de carboxyméthylcellulose, 0,2 % en poids d'hydroxyde de potassium et 0,1 % en poids d'esters de polymères fluoroaliphatiques.

30. Résine suivant l'une ou l'autre des revendications 14 et 15, caractérisée en ce qu'elle comprend 0,25 % en poids de chlorure de palladium, 0,2 % en poids d'acide succinique, mésoxalique, gluconique, tartrique, malique, citrique, polyacrylique atactique ou polyméthacrylique, 1,8 % en poids de carboxyméthylcellulose, 0,2 % en poids d'hydroxyde de potassium et 0,1 % en poids d'esters de polymères fluoroaliphatiques.

31. Résine suivant l'une ou l'autre des revendications 14 et 15, caractérisée en ce qu'elle comprend 0,125 % en poids de chlorure de palladium, 0,02 % en poids d'acide succinique, mésoxalique, gluconique, tartrique, malique, citrique, polyacrylique atactique ou polyméthacrylique, 1,8 % en poids de carboxyméthylcellulose, 0,2 % en poids d'hydroxyde de potassium et 0,1 % en poids d'esters de polymères fluoroaliphatiques.

32. Résine suivant l'une ou l'autre des revendications 14 et 15, caractérisée en ce qu'elle comprend 0,125 % en poids de chlorure de palladium, 0,5 % en poids d'acide succinique, mésoxalique, gluconique, tartrique, malique, citrique, polyacrylique atactique ou polyméthacrylique, 1,8 % en poids de carboxyméthylcellulose, 0,2 % en poids d'hydroxyde de potassium et 0,1 % en poids d'esters de polymères fluoroaliphatiques.

33. Résine suivant l'une ou l'autre des revendications 14 et 15, caractérisée en ce qu'elle comprend 0,125 % en poids de chlorure de palladium, 0,1 % en poids d'acide succinique, mésoxalique, gluconique, tartrique, malique, citrique, polyacrylique atactique ou polyméthacrylique, 1,8 % en poids de carboxyméthylcellulose, 0,2 % en poids d'hydroxyde de potassium et 0,1 % en poids d'esters de polymères fluoroaliphatiques.

34. Résine suivant l'une quelconque des revendications 1 à 33, caractérisée en ce que sa viscosité se situe entre 2 et 15000 cps et de préférence entre 3 et 5000 cps.

35. Procédé de préparation de la résine suivant l'une quelconque des revendications 1 à 34, caractérisé en ce qu'on mélange séparément, d'une part, le sel de palladium et le complexant du type carboxylique dans les deux tiers du volume total de solvant jusqu'à leur dissolution complète pour former une première solution et, d'autre part, le polymère dans le tiers du volume total de solvant jusqu'à leur dissolution complète pour former une seconde solution, on ajoute la première solution à la seconde solution ou vice versa, on mélange, on ajuste le pH à la valeur désirée entre 1 et 10 en ajoutant le composé basique et enfin en fonction de l'utilisation envisagée de la résine, on incorpore éventuellement un ou plusieurs des agents mouillant, colorant, promoteur d'adhérence, tensioactif et antimousse précités.

36. Procédé de dépôt de palladium catalytique sur la surface d'un substrat, à l'aide de la résine polymérique suivant l'une quelconque des revendications 1 à 34, caractérisé en ce qu'il comprend l'application de la résine sur le substrat d'une manière sélective ou non par jet d'encre, pointe pour table traçante, stylo, plume, pinceau, tampon, sérigraphie, laser, spray.

37. Utilisation de la résine polymérique suivant l'une quelconque des revendications 1 à 34 et/ou préparée par le procédé suivant la revendication 35, pour la métallisation de vias, et la fabrication de circuits imprimés, de capteurs, de protections électromagnétiques, de motifs décoratifs.

## Patentansprüche

1. Polymeres Harz, dessen Viskosität und pH-Wert einstellbar sind, zur katalytischen Abscheidung von Palladium auf einem Substrat, dadurch gekennzeichnet, daß es in Kombination ein Palladiumsalz, einen Komplexbildner vom Carbonsäure- oder Chloridtyp, ein wasserlösliches Polymer enthaltend Hydroxyl- und/oder Carboxylgruppen, eine basische Verbindung und ein Lösungsmittel ausgewählt aus der Gruppe, die aus Wasser, Methanol und Ethanol besteht, umfaßt, wobei der pH-Wert zwischen 1 und 10 liegt.

2. Harz nach Anspruch 1, dadurch gekennzeichnet, daß das Palladiumsalz ausgewählt ist aus der Gruppe, die aus Palladiumchlorid, Palladiumsulfat, Palladiumnitrat und Mischungen daraus besteht.

3. Harz nach Anspruch 1 oder 2, dadurch gekennzeichnet, daß der Komplexbildner vom Carbonsäuretyp aus der Gruppe ausgewählt ist, die aus Carbonsäuren, a-Hydroxycarbonsäuren, Polycarbonsäuren und deren Mischungen besteht.

4. Harz nach Anspruch 3, dadurch gekennzeichnet, daß es als Komplexbildner eine Carbonsäure enthält, die ausgewählt ist aus der Gruppe, die aus Bernsteinsäure, Mesoxalsäure, Gluconsäure und Mischungen daraus besteht.

5. Harz nach Anspruch 3, dadurch gekennzeichnet, daß es als Komplexbildner eine α-Hydroxycarbonsäure enthält, die aus der Gruppe ausgewählt ist, die aus Weinsäure, Äpfelsäure, Zitronensäure und Mischungen daraus besteht.

6. Harz nach Anspruch 3, dadurch gekennzeichnet, daß es als Komplexbildner eine Polycarbonsäure enthält, die ausgewählt ist aus der Gruppe, die aus ataktischer Polyacrylsäure, Polymethacrylsäure und Mischungen daraus besteht.

7. Harz nach Anspruch 1 oder 2, dadurch gekennzeichnet, daß der Komplexbildner vom Chloridtyp ausgewählt ist aus der Gruppe, die aus Salzsäure und chlorierten Salzen besteht.

8. Harz nach einem der Ansprüche 1 bis 7, dadurch gekennzeichnet, daß das Hydroxyl- und/oder Carboxylgruppen enthaltende Harz ausgewählt ist aus der Gruppe, die aus Cellulosepolymeren, Acrylpolymeren und Mischungen daraus besteht.

9. Harz nach Anspruch 8, dadurch gekennzeichnet, daß es als Cellulosepolymer Carboxymethylcellulose, Hydroxypropylmethylcellulose oder Mischungen daraus enthält.

10. Harz nach Anspruch 8, dadurch gekennzeichnet, daß es als Acrylpolymer Polyacrylsäure, Polymethacrylsäure oder eine Mischung daraus enthält.

11. Harz nach einem der Ansprüche 1 bis 10, dadurch gekennzeichnet, daß die basische Verbindung ein basisches Salz, eine Base oder eine Mischung daraus ist.

12. Harz nach Anspruch 11, dadurch gekennzeichnet, daß die basische Verbindung ein basisches Salz ist, das aus der Gruppe ausgewählt ist, die aus Natriumcarbonat, Kaliumcarbonat, Calciumcarbonat und Mischungen daraus besteht.

13. Harz nach Anspruch 11, dadurch gekennzeichnet, daß die basische Verbindung eine Base ist, die ausgewählt ist aus der Gruppe, die aus Kaliumhydroxid, Natriumhydroxid und Mischungen daraus besteht.

14. Harz nach einem der Ansprüche 1 bis 13, dadurch gekennzeichnet, daß es zumindest ein Benetzungsmittel, ein Färbemittel, ein Haftungsverbesserungsmittel, ein grenzflächenaktives Mittel oder ein schaumverhütendes Mittel oder eine Kombination aus zwei oder mehr dieser Mittel enthält.

15. Harz nach Anspruch 14, dadurch gekennzeichnet, daß es als Benetzungsmittel zumindest ein Silan, einen fluoraliphatischen Polymerester oder ein Erzeugnis mit hohem Gehalt an 2-Butoxyethanol enthält.

16. Harz nach Anspruch 14 oder 15, dadurch gekennzeichnet, daß es als Haftungsverbesserungsmittel eine wasserlösliche oder mit Wasser mischbare Verbindung enthält, die funktionelle Gruppen aufweist, die die Oberfläche des Substrats angreifen können, wie Amine, Carboxylate und/oder Methacryloxy.

17. Harz nach einem der Ansprüche 14 bis 16, dadurch gekennzeichnet, daß es als Färbungsmittel ein Pigment auf Titanoxidbasis beinhaltet.

18. Harz nach einem der Ansprüche 1 bis 17, dadurch gekennzeichnet, daß die Konzentration des Palladiumsalzes zwischen 0,05 und 5 Gew.-% und vorzugsweise zwischen 0,1 und 1,0 Gew.-% beträgt.

19. Harz nach einem der Ansprüche 1 bis 18, dadurch gekennzeichnet, daß die Konzentration des Komplexbildners vom Carbonsäure- oder Chloridtyp zwischen 0,01 und 5 Gew.-% und vorzugsweise zwischen 0,04 und 2 Gew.-% beträgt.

20. Harz nach einem der Ansprüche 1 bis 19, dadurch gekennzeichnet, daß die Konzentration des Hydroxyl- und/oder Carboxylgruppen enthaltenden Polymers zwischen 0,1 und 15 Gew.-% und vorzugsweise zwischen 0,1 und 7 Gew.-% beträgt.

21. Harz nach einem der Ansprüche 12 oder 14 bis 20, dadurch gekennzeichnet, daß die Konzentration des basischen Salzes zwischen 0,01 und 5 Gew.-% und vorzugsweise zwischen 0,01 und 2,5 Gew.-% beträgt.

22. Harz nach einem der Ansprüche 13 bis 20, dadurch gekennzeichnet, daß die Konzentration der Base zwischen 0,01 und 2,5 Gew.-% und vorzugsweise zwischen 0,1 und 1,5 Gew.-% beträgt.

23. Harz nach einem der Ansprüche 14 bis 22, dadurch gekennzeichnet, daß die Gesamtkonzentration des oder der genannten Mittel(s) zwischen 0,01 und 5 Gew.-% und vorzugsweise zwischen 0,01 und 3 Gew.-% beträgt.

24. Harz nach einem der Ansprüche 1 bis 23, dadurch gekennzeichnet, daß es demineralisiertes Wasser als Lösungsmittel enthält.

25. Harz nach einem der Ansprüche 1 bis 3, 5, 8, 9, 11, 12 und 18 bis 21, dadurch gekennzeichnet, daß es 0,75 Gew.-% Palladiumchlorid, 0,12 Gew.-% Weinsäure, 0,4 Gew.-% Carboximethylcellulose, 2,0 Gew.-% Natriumcarbonat und den verbleibenden Gewichtsprozentanteil demineralisiertes Wasser oder Methanol enthält.

26. Harz nach einem der Ansprüche 1 bis 5, 7 bis 11, 13, 18 bis 20 und 22, dadurch gekennzeichnet, daß es 0,25 Gew.-% Palladiumchlorid, 0,04 Gew.-% Bernstein-, Glucon-, Wein-, Salzsäure oder Natriumchlorid, 0,4 Gew.-% Polyacrylsäure, Polymethacrylsäure, Hydroxymethylcellulose oder Carboxymethylcellulose, 1 Gew.-% Kaliumhydroxid und den verbleibenden Gewichtsprozentanteil demineralisiertes Wasser oder Methanol enthält.

27. Harz nach einem der Ansprüche 1 bis 12 und 18 bis 21, dadurch gekennzeichnet, daß es 0,25 Gew.-% Palladiumchlorid, 0,04 Gew.-% Bernstein-, Mesoxal-, Glucon-, Wein-, Äpfel-, Zitronensäure, ataktische Polyacrylsäure oder Polymethacrylsäure, 0,4 Gew.-% Polyacrylsäure, Polymethacrylsäure oder Hydroxymethylcellulose, 2 Gew.-% Natriumcarbonat und den übrigen Gewichtsprozentanteil demineralisiertes Wasser oder Methanol enthält.

28. Harz nach Anspruch 14 oder 15, dadurch gekennzeichnet, daß es 0,25 Gew.-% Palladiumchlorid, 0,04 Gew.-% Bernstein-, Mesoxal-, Glucon-, Wein-, Äpfel-, Zitronensäure, ataktische Polyacrylsäure oder Polymethacrylsäure, 1,8 Gew.-% Carboxymethylcellulose, 0,2 Gew.-% Kaliumhydroxid und 0,1 Gew.-% fluoraliphatischer Polymerester enthält.

29. Harz nach Anspruch 14 oder 15, dadurch gekennzeichnet, daß es 0,25 Gew.-% Palladiumchlorid, 1,06 Gew.-% Bernstein-, Mesoxal-, Glucon-, Wein-, Äpfel-, Zitronensäure, ataktische Polyacrylsäure oder Polymethacrylsäure, 1,8 Gew.-% Carboxymethylcellulose, 0,2 Gew.-% Kaliumhydroxid und 0,1 Gew.-% fluoraliphatische Polymerester enthält.

30. Harz nach Anspruch 14 oder 15, dadurch gekennzeichnet, daß es 0,25 Gew.-% Palladiumchlorid, 0,2 Gew.-% Bernstein-, Mesoxal-, Glucon-, Wein-, Äpfel-, Zitronensäure, ataktische Polyacrylsäure oder Polymethacrylsäure, 1,8 Gew.-% Carboxymethylcellulose, 0,2 Gew.-% Kaliumhydroxid und 0,1 Gew.-% fluoraliphatische Polymerester enthält.

31. Harz nach Anspruch 14 oder 15, dadurch gekennzeichnet, daß es 0,125 Gew.-% Palladiumchlorid, 0,02 Gew.-% Bernstein-, Mesoxal-, Glucon-, Wein-, Äpfel-, Zitronensäure, ataktische Polyacrylsäure oder Polymethacrylsäure, 1,8 Gew.-% Carboxymethylcellulose, 0,2 Gew.-% Kaliumhydroxid und 0,1 Gew.-% fluoraliphatische Polymerester enthält.

32. Harz nach Anspruch 14 oder 15, dadurch gekennzeichnet, daß es 0,125 Gew.-% Palladiumchlorid, 0,5 Gew.-% Bernstein-, Mesoxal-, Glucon-, Wein-, Äpfel-, Zitronensäure, ataktische Polyacrylsäure oder Polymethacrylsäure, 1,8 Gew.-% Carboxymethylcellulose, 0,2 Gew.-% Kaliumhydroxid und 0,1 Gew.-% fluoraliphatische Polymerester enthält.

33. Harz nach Anspruch 14 oder 15, dadurch gekennzeichnet, daß es 0,125 Gew.-% Palladiumchlorid, 0,1 Gew.-% Bernstein-, Mesoxal-, Glucon-, Wein-, Äpfel-, Zitronensäure, ataktische Polyacrylsäure oder Polymethacrylsäure, 1,8 Gew.-% Carboxymethylcellulose, 0,2 Gew.-% Kaliumhydroxid und 0,1 Gew.-% fluoraliphatische Polymerester enthält.

34. Harz nach einem der Ansprüche 1 bis 33, dadurch gekennzeichnet, daß seine Viskosität zwischen 2 und 15000 cP und vorzugsweise zwischen 3 und 5000 cP liegt.

35. Verfahren zur Herstellung von Harz nach einem der Ansprüche 1 bis 34, dadurch gekennzeichnet, daß man getrennt mischt, einerseits das Palladiumsalz und den Komplexbildner des Carboxyltyps in zwei Dritteln des Gesamtvolumens des Lösungsmittels bis zur vollständigen Auflösung, wobei eine erste Lösung gebildet wird, und andererseits das Polymer in einem Drittel des Gesamtvolumens des Lösungsmittels bis zur vollständigen Auflösung, wobei eine zweite Lösung gebildet wird, daß man die erste Lösung zur zweiten Lösung hinzufügt oder umgekehrt, mischt, den pH-Wert auf den gewünschten Wert zwischen 1 und 10 einstellt, indem die basische Verbindung hinzugefügt wird, und daß in Abhängigkeit der beabsichtigten Verwendung des Harzes ggf. ein oder mehrere der genannten Benetzungs-, Färbungs-, Haftungsverbesserungs-, grenzflächenaktiven und Schaumverhütungsmittel eingearbeitet werden.

36. Verfahren zum Ablagern von katalytischem Palladium auf einer Substratfläche, mit Hilfe des polymeren Harzes nach einem der Ansprüche 1 bis 34, dadurch gekennzeichnet, daß es das Aufbringen des Harzes auf das Substrat in einer selektiven oder nichtselektiven Weise durch Tintenstrahl, Stift für ein Zeichengerät, Zeichenstift, Feder, Pinsel, Stempel, Serigraphie, Laser, Spray umfaßt.

37. Verwendung des polymeren Harzes nach einem der Ansprüche 1 bis 34, und/oder zubereitet durch das Verfahren nach Anspruch 35, zum Metallisieren von Durchgängen, und zur Herstellung von gedruckten Schaltungen, Aufnehmern, elektromagnetischen Abschirmungen und Dekorationsmotiven.

## Claims

1. Polymeric resin with adjustable viscosity and pH for depositing catalytic palladium on a substrate, characterised in that it comprises in combination a palladium salt, a complexing agent of the carboxylic acid or chloride type, a polymer containing hydroxyl and or carboxyl groups soluble in water, a basic compound and a solvent chosen from water, methanol and ethanol, the pH value being comprised between 1 and 10.

2. Resin according to claim 1, characterised in that the palladium salt is chosen from palladium chloride, palladium sulphate, palladium nitrate and their mixtures.

3. Resin according to one or other of claims 1 and 2, characterised in that the complexing agent of the carboxylic acid type is chosen from the group comprising the carboxylic acids, the α-hydrocarboxylic acids, the carboxylic polyacids and their mixtures.

4. Resin according to claim 3, characterised in that, when it comprises a carboxylic acid as complexing agent, the latter is selected from succinic acid, mesoxalic acid, gluconic acid and their mixtures.

5. Resin according to claim 3, characterised in that, when it comprises an α-hydrocarboxylic acid as a complexing agent, the latter is chosen from tartaric acid, malic acid, citric acid and their mixtures.

6. Resin according to claim 3, characterised in that, when it comprises a carboxylic polyacid as a complexing agent, the latter is chosen from atactic polyacrylic acid, polymethacrylic acid and their mixtures.

7. Resin according to one or other of claims 1 and 2, characterised in that the complexing agent of the chloride type is chosen from hydrochloric acid and the chlorinated salts.

8. Resin according to any one of claims 1 to 7, characterised in that the polymer containing hydroxyl and/or carboxyl groups is chosen from the cellulosic polymers, the acrylic polymers and their mixtures.

9. Resin according to claim 8, characterised in that it comprises as a cellulosic polymer, carboxymethyl cellulose, hydroxypropyl methylcellulose or their mixtures.

10. Resin according to claim 8, characterised in that it comprises as an acrylic polymer polyacrylic acid, polymethacrylic acid or a mixture of those.

11. Resin according to any one of claims 1 to 10, characterised in that the basic compound is a basic salt, a base or a mixture of those.

12. Resin according to claim 11, characterised in that the basic compound is a basic salt chosen from the group comprising sodium carbonate, potassium carbonate, calcium carbonate and their mixtures.

13. Resin according to claim 11, characterised in that the basic compound is a base chosen from potassium hydroxide, sodium hydroxide and their mixtures.

14. Resin according to any one of claims 1 to 13, characterised in that it comprises at least one wetting agent, a colouring agent, an adhesion-promoting agent, a surfactant, a de-foaming agent or a combination of two or more than two of these agents.

15. Resin according to claim 14, characterised in that it comprises as a wetting agent at least one silane, an ester of fluoroaliphatic polymer or a product with a high content of 2-butoxy-ethanol.

16. Resin according to one or other of claims 14 and 15, characterised in that it comprises as an adhesion-promoting agent a compound soluble in or miscible with water containing functional groups capable of attacking the surface of the substrate, such as amines, carboxylates and/or methacryloxy.

17. Resin according to any one of claims 14 to 16, characterised in that it comprises as a colouring agent a pigment with a titanium oxide base.

18. Resin according to any one of claims 1 to 17, characterised in that the concentration of palladium salt, in percent by weight, is from 0.05 to 5%, and preferably from 0.1 to 1.0%.

19. Resin according to any one of claims 1 to 18, characterised in that the concentration of complexing agent of the carboxylic acid or chloride type, in percentage by weight, is from 0.01 to 5% and preferably 0.04 to 2%.

20. Resin according to any one of claims 1 to 19, characterised in that the concentration of polymer containing hydroxyl and/or carboxyl groups, in percentage by weight, is from 0.1 to 15% and preferably 0.1 to 7%.

21. Resin according to any one of claims 12 and 14 to 20, characterised in that the concentration of basic salt, in percentage by weight, is from 0.01 to 5% and preferably from 0.01 to 2.5%.

22. Resin according to any one of claims 13 to 20, characterised in that the concentration of base, in percentage by weight, is from 0.01 to 2.5% and preferably from 0.1 to 1.5%.

23. Resin according to any one of claims 14 to 22, characterised in that the total concentration of the above mentioned agent(s), in percentage by weight, is from 0.01 to 5% and preferably from 0.01 to 3%.

24. Resin according to any one of claims 1 to 23, characterised in that it comprises demineralised water as a solvent.

25. Resin according to any one of claims 1 to 3, 5, 8, 9, 11, 12 and 18 to 21, characterised in that it comprises 0.75% by weight of palladium chloride, 0.12% by weight of tartaric acid, 0.4% by weight of carboxymethylcellulose, 2.0% by weight of sodium carbonate and the remaining percentage by weight of demineralised water or methanol.

26. Resin according to any one of claims 1 to 5, 7 to 11, 13, 18 to 20 and 22, characterised in that it comprises 0.25% by weight of palladium chloride, 0.04% by weight of succinic, gluconic, tartaric, hydrochloric acids or of sodium chloride, 0.4% by weight of polyacrylic acid, of polymethacrylic acid, of hydroxymethylcellulose or of carboxymethylcellulose, 1% by weight of potassium hydroxide and the remaining percentage by weight of demineralised water or methanol.

27. Resin according to any one of claims 1 to 12 and 18 to 21, characterised in that it comprises 0.25% by weight of palladium chloride, 0.04% by weight of succinic, mesoxalic, gluconic, tartaric, malic, citric, atactic polyacrylic or polymethacrylic acid, 0.4% by weight of polyacrylic acid, of polymethacrylic acid or of hydroxymethylcellulose, 2% by weight of sodium carbonate and the remaining percentage by weight of demineralised water or methanol.

28. Resin according to one or other of claims 14 and 15, characterised in that it comprises 0.25% by weight of palladium chloride, 0.04% by weight of succinic, mesoxalic, gluconic, tartaric, malic, citric, atactic polyacrylic or polymethacrylic acid, 1.8% by weight of carboxymethylcellulose, 0.2% by weight of potassium hydroxate and 0.1% of esters of fluoroaliphatic polymers.

29. Resin according to one or other of claims 14 and 15, characterised in that it comprises 0.25% by weight of palladium chloride, 1.06% by weight of succinic, mesoxalic, gluconic, tartaric, malic, citric, atactic polyacrylic or polymethacrylic acid, 1.8% by weight of carboxymethylcellulose, 0.2% by weight of potassium hydroxide and 0.1% by weight of esters of fluoroaliphatic polymers.

30. Resin according to one or other of claims 14 and 15, characterised in that it comprises 0.25% by weight of palladium chloride, 0.2% by weight of succinic, mesoxalic, gluconic, tartaric, malic, citric, atactic polyacrylic or polymethacrylic acid, 1.8% by weight of carboxymethylcellulose, 0.2% by weight of potassium hydroxide and 0.1% by weight of esters of fluoroaliphatic polymers.

31. Resin according to one or other of claims 14 and 15, characterised in that it comprises 0.125% by weight of palladium chloride, 0.02% by weight of succinic, mesoxalic, gluconic, tartaric, malic, citric, atactic polyacrylic or polymethacrylic acid, 1.8% by weight of carboxymethylcellulose, 0.2% by weight of potassium hydroxide and 0.1% by weight of esters of fluoroaliphatic polymers.

32. Resin according to one or other of claims 14 and 15, characterised in that it comprises 0.125% by weight of palladium chloride, 0.5% by weight of succinic, mesoxalic, gluconic, tartaric, malic, citric, atactic polyacrylic or polymethacrylic acid, 1.8% by weight of carboxymethylcellulose, 0.2% by weight of potassium hydroxide and 0.1% by weight of esters of fluoroaliphatic polymers.

33. Resin according to one or other of claims 14 and 15, characterised in that it comprises 0.125% by weight of palladium chloride, 0.1% by weight of succinic, mesoxalic, gluconic, tartaric, malic, citric, atactic polyacrylic or polymethacrylic acid, 1.8% by weight of carboxymethylcellulose, 0.2% by weight of potassium hydroxide and 0.1% by weight of esters of fluoroaliphatic polymers.

34. Resin according to any one of claims 1 to 33, characterised in that its viscosity is situated between 2 and 15000 cps and preferably between 3 and 5000 cps.

35. Method for preparing resin according to any one of claims 1 to 34, characterised in that on the one hand the palladium salt and the complexing agent of the carboxylic type are mixed separately in two-thirds of the total volume of solvent until they are completely dissolved in order to form a first solution, and on the other hand, the polymer is mixed in a third of the total volume of solvent until they are completely dissolved, forming a second solution, the first solution is added to the second solution or vice versa, mixing is carried out, the pH is adjusted to the value desired between 1 and 10 by adding the basic compound and finally, as a function of the use envisaged for the resin, there are if necessary incorporated one or more of the wetting, colouring, adhesion-promoting, surfactant and defoaming agents aforementioned.

36. Method of depositing catalytic palladium on the surface of a substrate, with the aid of the polymeric resin according to any one of claims 1 to 34, characterised in that it comprises application of the resin to the substrate in a manner whether selective or not by ink-jet, point for tracing table, fountain pen, pen, paintbrush, plug, screen printing, laser, spray.

37. Use of the polymeric resin according to any one of claims 1 to 34 and/or prepared by the method according to claim 35, for metallisation of tracks, and producing printed circuits, detectors, electromagnetic protective devices, decorative motifs.
